# EUROPÄISCHE PATENTANMELDUNG

(11) **EP 1 835 775 A1**
(43) Veröffentlichungstag der Anmeldung: **19.09.2007**
(21) Anmeldenummer: 06005214.9
(22) Anmeldetag: 14.03.2006
(51) Int. Cl.: H04Q 7/38, H04Q 7/32

(54) **Optimierung des Verhaltens einer Teilnehmerstation eines Funkkommunikationssystems unter Nutzung eines die aktuelle Funkauslastung beschreibenden Parameters**

(71) Anmelder: NOKIA SIEMENS NETWORKS GMBH & CO. KG, 81541 München (DE)
(72) Erfinder: Raaf, Bernhard, 82061 Neuried (DE); Schulz, Egon, Dr., 80993 München (DE); Zirwas, Wolfgang, 82194 Gröbenzell (DE)

(57) **Zusammenfassung**

Die Erfindung betrifft ein Verfahren zum Betreiben eines Funkkommunikationssystems, welches zumindest eine netzseitige Funkstation (BS) mit ihrem Funkabdeckungsbereich (FZ) umfasst. Unter Verwendung einer eine aktuelle Funkauslastung in dem Funkabdeckungsbereich (FZ) beschreibenden Größe wird ein Parameter (LI) ausgewählt. Die netzseitige Funkstation (BS) versendet eine den Parameter (LI) enthaltende Nachricht an zumindest eine Teilnehmerstation (MS), wobei der Parameter (LI) ein Verhalten der zumindest einen Teilnehmerstation (MS) vorgibt. Weiterhin betrifft die Erfindung eine Vorrichtung (BS, NET) und ein Computerprogrammprodukt zur Durchführung des Verfahrens.

## Beschreibung

Die Erfindung betrifft ein Verfahren zum Betreiben eines Funkkommunikationssystems, welches zumindest eine netzseitige Funkstation mit ihrem Funkabdeckungsbereich umfasst.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Erfindung liegt die Aufgabe zugrunde, ein effizientes Verfahren zum Betreiben eines Funkkommunikationssystems aufzuzeigen. Weiterhin sollen eine Vorrichtung und ein Computerprogrammprodukt zur Durchführung des Verfahrens vorgestellt werden.

Diese Aufgabe wird durch ein Verfahren mit den Merkmalen des Anspruchs 1, sowie durch eine Vorrichtung und durch ein Computerprogrammprodukt mit Merkmalen von nebengeordneten Ansprüchen gelöst. Vorteilhafte Ausgestaltungen und Weiterbildungen sind Gegenstand von Unteransprüchen.

Das erfindungsgemäße Verfahren betrifft das Betreiben eines Funkkommunikationssystems, wobei das Funkkommunikationssystem zumindest eine netzseitige Funkstation mit ihrem Funkabdeckungsbereich umfasst. Unter Verwendung einer eine aktuelle Funkauslastung in dem Funkabdeckungsbereich beschreibenden Größe wird ein Parameter ausgewählt. Die netzseitige Funkstation sendet eine den Parameter enthaltende Nachricht an zumindest eine Teilnehmerstation. Hierbei gibt der Parameter ein Verhalten der zumindest einen Teilnehmerstation vor betreffend:
- Die Versendung durch die zumindest eine Teilnehmerstation von Informationen betreffend den Funkkanal zwischen der netzseitigen Funkstation und der zumindest einen Teilnehmerstation; bei dem Funkkanal zwischen der netzseitigen Funkstation und der zumindest einen Teilnehmerstation handelt es sich vorzugsweise um den Funkkanal in Abwärtsrichtung, d.h. den Funkkanal für die Versendung von Nachrichten von der netzseitigen Funkstation an die zumindest eine Teilnehmerstation. und/oder
- Die Anwendung eines Verfahrens zur Bearbeitung von Nachrichten durch die zumindest eine Teilnehmerstation; hierbei kann es sich z.B. um Kodierungsverfahren und/oder Modulationsverfahren handeln. und/oder
- Die Versendung von Signalen durch die zumindest eine Teilnehmerstation zur Verwendung zur Kanalschätzung durch die netzseitige Funkstation; bei diesen Signalen kann es sich insbesondere um von der zumindest einen Teilnehmerstation periodisch zu versendende Pilotsignale handeln, welche die netzseitige Funkstation nutzen kann, um den Funkkanal in Aufwärtsrichtung zu schätzen. Insbesondere kann der Parameter die Häufigkeit und/oder den Umfang der Versendung dieser Signale vorgeben. und/oder
- Die Häufigkeit der Durchführung einer Kanalschätzung durch die zumindest eine Teilnehmerstation; diese Kanalschätzung kann insbesondere an von der netzseitigen Funkstation periodisch versendeten Pilotsignalen erfolgen, so dass die zumindest eine Teilnehmerstation den Funkkanal in Abwärtsrichtung schätzen kann. und/oder
- Die Sendeleistung von von der zumindest einen Teilnehmerstation versendeten Nachrichten; der Parameter kann einen konkreten Wert für die Sendeleistung vorgeben, oder auch lediglich vorgeben, dass eine Steigerung / Reduktion erfolgen soll. und/oder
- Das Abhören von Nachrichten, welche den Parameter enthalten, durch die zumindest eine Teilnehmerstation. So kann es z.B. bei bestimmten Auslastungen vorteilhaft sein, wenn rasch ein neuer Parameter ausgewählt werden kann; in diesem Fall sollte die zumindest eine Teilnehmerstation häufig Nachrichten, welche den Parameter enthalten, abhören bzw. auswerten.

Der Parameter kann eine explizite oder implizite Angabe des jeweiligen Verhaltens der zumindest einen Teilnehmerstation enthalten. Es ist möglich, dass der Parameter das Verhalten lediglich hinsichtlich einer der genannten Größen vorgibt. Er kann das Verhalten jedoch auch hinsichtlich einer Kombination von zwei oder mehreren der genannten Größen vorgeben.

Die konkrete Ausgestaltung der die Auslastung beschreibenden Größe kann unterschiedlich sein. Die Auslastung ist dadurch bedingt, dass in dem Funkabdeckungsbereich der netzseitigen Funkstation lediglich ein begrenzter Umfang von Funkressourcen verfügbar ist, so dass lediglich ein begrenzter Umfang an Funkkommunikation stattfinden kann.

In Weiterbildung der Erfindung gibt der Parameter das Verhalten der zumindest einen Teilnehmerstation hinsichtlich der Versendung durch die zumindest eine Teilnehmerstation von Informationen betreffend den Funkkanal zwischen der netzseitigen Funkstation und der zumindest einen Teilnehmerstation derart vor, dass bei steigender Funkauslastung die Informationen häufiger und/oder in größerem Umfang zu versenden sind. Sendet die zumindest eine Teilnehmerstation mehr Informationen über den Abwärtsrichtungs-Funkkanal, können Nachrichten von der netzseitigen Funkstation in Abwärtsrichtung effizienter an die zumindest eine Teilnehmerstation übertragen werden. Hierdurch ist es möglich, weniger Funkressourcen pro Nachricht einzusetzen, so dass die Funkressourcen effizienter genutzt werden, so dass hierdurch einer hohen Auslastung Rechnung getragen werden kann. Dies ist bei niedrigen Auslastungen nicht nötig, so dass in diesem Fall auf das batterieaufwendige häufige Versenden der Informationen betreffend den Funkkanal durch die zumindest eine Teilnehmerstation verzichtet werden kann.

Für diese und die im folgenden beschriebenen Weiterbildungen gilt: steigt die Funkauslastung, so kann ein neuer Parameter ausgewählt werden. Der neue Parameter gibt ein geändertes Verhalten der zumindest einen Teilnehmerstation vor, und zwar gemäß den jeweiligen Weiterbildungen. Das jeweils umgekehrte gilt für den Fall, dass ein neuer Parameter wegen einer gesunkenen Funkauslastung ausgewählt wird.

In Weiterbildung der Erfindung gibt der Parameter das Verhalten der zumindest einen Teilnehmerstation hinsichtlich der Anwendung eines Verfahrens zur Bearbeitung von Nachrichten durch die zumindest eine Teilnehmerstation derart vor, dass bei steigender Funkauslastung ein Verfahren angewendet wird, welches die Übertragung von Informationen mit höherer Datenrate ermöglicht. Denn eine Übertragung von Informationen mit höherer Datenrate entspricht einer effizienteren Ausnutzung von Funkressourcen, so dass hierdurch einer hohen Auslastung Rechnung getragen werden kann. Dies ist bei niedrigen Auslastungen nicht nötig, so dass in diesem Fall auf das batterieaufwendige komplexere Verfahren zur Bearbeitung von Nachrichten verzichtet werden kann. Das Verfahren zur Bearbeitung von Nachrichten kann sich auf in Aufwärts- und/oder in Abwärtsrichtung übertragene Nachrichten beziehen, vorzugsweise in Abhängigkeit davon, in welche Übertragungsrichtung die Auslastung betrachtet wird.

In Weiterbildung der Erfindung gibt der Parameter das Verhalten der zumindest einen Teilnehmerstation hinsichtlich der Versendung von Signalen durch die zumindest eine Teilnehmerstation zur Verwendung zur Kanalschätzung durch die netzseitige Funkstation derart vor, dass bei steigender Funkauslastung diese Signale weniger häufig und/oder in kleinerem Umfang zu versenden sind. Wird die Versendung dieser Signale eingeschränkt, sind die der netzseitigen Funkstation bekannten Werte für den Aufwärtsrichtungs-Funkkanal zwar nicht immer aktuell, jedoch werden durch die Einschränkung der Versendung Funkressourcen in Aufwärtsrichtung eingespart, so dass hierdurch einer hohen Auslastung Rechnung getragen werden kann.

In Weiterbildung der Erfindung gibt der Parameter das Verhalten der zumindest einen Teilnehmerstation hinsichtlich der Häufigkeit der Durchführung einer Kanalschätzung durch die zumindest eine Teilnehmerstation derart vor, dass bei steigender Funkauslastung die Kanalschätzung weniger häufig durchzuführen ist. Versendet die netzseitige Funkstation Signale, welche die zumindest eine Teilnehmerstation zur Kanalschätzung verwendet, weniger häufig, so werden hierdurch Abwärtsrichtungs-Funkressourcen eingespart, so dass hierdurch einer hohen Auslastung Rechnung getragen werden kann.

In Weiterbildung der Erfindung gibt der Parameter das Verhalten der zumindest einen Teilnehmerstation hinsichtlich der Sendeleistung von von der zumindest einen Teilnehmerstation versendeten Nachrichten derart vor, dass bei steigender Funkauslastung die Nachrichten mit größerer Sendeleistung zu versenden sind. Dieses Vorgehen ist dadurch erklärbar, dass es der zumindest einen Teilnehmerstation insbesondere dann möglich ist, Nachrichten mit geringer Sendeleistung zu versenden, wenn sie einen großen Umfang an Informationen betreffend den Aufwärtsrichtungs-Funkkanal von der netzseitigen Funkstation empfängt. Bei einer hohen Funkauslastung wird auf diese Versendung der Informationen betreffend den Aufwärtsrichtungs-Funkkanal in großem Umfang verzichtet, um Funkressourcen einzusparen, so dass die Versendung von Nachrichten mit niedriger Sendeleistung nicht mehr möglich oder vorteilhaft ist.

Mit Vorzug wird der Parameter unter Verwendung der eine aktuelle Funkauslastung in dem Funkabdeckungsbereich beschreibenden Größe und zusätzlich unter Verwendung einer eine aktuelle Funkauslastung in zumindest einem anderen Funkabdeckungsbereich beschreibenden Größe ausgewählt. Dieses Vorgehen eignet sich für ein zellulares System. Es wird hierbei berücksichtigt, dass Funkverkehr in einer Funkzelle zu unerwünschten Interferenzen in umliegenden Funkzellen führt.

In Ausgestaltung der Erfindung wird der Parameter aus einer Anzahl auswählbarer Parameter ausgewählt. Auf diese Weise können diskrete Zustände definiert werden, z.B. die Zustände "niedrige Funkauslastung", "mittlere Funkauslastung", und "hohe Funkauslastung", wobei jedem Zustand ein Parameter zugeordnet ist.

Einer Weiterbildung der Erfindung gemäß liegt der zumindest einen Teilnehmerstation eine Zuordnungsvorschrift zwischen mehreren Parametern und jeweils einem der zumindest einen Teilnehmerstation durch die Parameter vorgegebenen Verhalten vor. Dieser Zuordnungsvorschrift kann die zumindest eine Teilnehmerstation entnehmen, wie sie sich als Reaktion auf den Empfang des Parameters verhalten soll. Die zumindest eine Teilnehmerstation kann die Zuordnungsvorschrift von der netzseitigen Funkstation empfangen, oder auch bereits zuvor gespeichert haben.

Es ist möglich, dass gemäß der Zuordnungsvorschrift für zumindest einen Parameter mehrere alternative Verhalten vorgegeben sind. Zwischen diesen kann die zumindest eine Teilnehmerstation wählen. Z.B. können für einen bestimmten Parameter mehrere Verfahren zur Nachrichtenbearbeitung zur Auswahl gestellt sein. Zusätzlich oder alternativ ist es möglich, dass verschiedenen Teilnehmerstationen verschiedene Zuordnungsvorschriften vorliegen. Hierdurch kann berücksichtigt werden, dass sich Teilnehmerstationen mit verschiedenen Fähigkeiten in dem Funkabdeckungsbereich der netzseitigen Funkstation befinden.

Einer bevorzugten Weiterbildung der Erfindung gemäß wird die den Parameter enthaltende Nachricht per Broadcast ausgestrahlt. Dies bedeutet, dass die Nachricht nicht nur an eine einzelne Teilnehmerstation, sondern an alle Teilnehmerstationen innerhalb des Funkabdeckungsbereiches der netzseitigen Funkstation adressiert ist.

Der Parameter kann von der netzseitigen Funkstation oder von einer mit der netzseitigen Funkstation verbundenen netzseitigen Einrichtung ausgewählt werden. In letzterem Fall erfolgt nach der Auswahl eine Mitteilung an die netzseitige Funkstation, denn diese hat die Nachricht an die zumindest eine Teilnehmerstation zu versenden.

Die erfindungsgemäße Vorrichtung umfasst Mittel zum Auswählen eines Parameters unter Verwendung einer eine aktuelle Funkauslastung in dem Funkabdeckungsbereich beschreibenden Größe, sowie Mittel zum Erstellen und Versenden einer den Parameter enthaltenden Nachricht an zumindest eine Teilnehmerstation. Die erfindungsgemäße Vorrichtung eignet sich insbesondere zur Durchführung des erfindungsgemäßen Verfahrens, wobei dies auch auf die Ausgestaltungen und Weiterbildungen zutreffen kann. Hierzu kann sie weitere geeignete Mittel umfassen. Die erfindungsgemäße Vorrichtung kann der netzseitigen Funkstation entsprechen. Alternativ ist es jedoch auch möglich, dass die erfindungsgemäße Vorrichtung eine andere netzseitige Einrichtung darstellt. Weiterhin ist es möglich, dass die erfindungsgemäße Vorrichtung durch eine Mehrzahl von Einzelvorrichtungen realisiert wird, z.B. durch die netzseitige Funkstation und eine andere netzseitige Einrichtung, wie z.B. eine Einrichtung zur Kontrolle der netzseitigen Funkstation.

Das erfindungsgemäße Computerprogrammprodukt dient der Durchführung des erfindungsgemäßen Verfahrens, wobei dies auch auf die Ausgestaltungen und Weiterbildungen zutreffen kann. Unter einem Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden.

Im folgenden wird die Erfindung anhand eines Ausführungsbeispiels näher erläutert. Dabei zeigt:

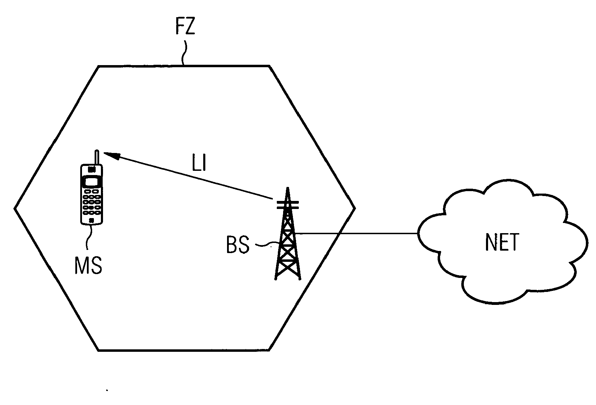

- Figur 1:: einen Ausschnitt aus einem Funkkommunikationssystem.

Der in Figur 1 dargestellte Ausschnitt aus einem Funkkommunikationssystem zeigt eine Funkzelle FZ einer Basisstation BS, schematisch als Sechseck abgebildet. Bei der Basisstation BS handelt es sich um eine netzseitige Funkeinrichtung des Funkkommunikationssystems, welche mit Teilnehmerstationen, wie z.B. mit der Teilnehmerstation MS, per Funk kommunizieren kann. Die Basisstation BS ist mit weiteren netzseitigen Einrichtungen NET des Funkkommunikationssystems verbunden. Es können weitere Funkzellen vorhanden sein, in Figur 1 nicht dargestellt. Das Funkkommunikationssystem kann z.B. als zellulares System nach einem 3GPP Standard ausgestaltet sein.

Die folgenden Ausführungen beziehen sich insbesondere auf MIMO-Übertragungen, d.h. auf Übertragungen, bei welchen sowohl der Sender als auch der Empfänger eine Mehrzahl von Antennen aufweisen. Sie sind jedoch auch auf andere Übertragungsverfahren anwendbar.

Es wird eine Größe bestimmt, welche die Auslastung innerhalb der Funkzelle FZ beschreibt. Diese Auslastung kann z.B. als Prozentsatz des aktuellen Datendurchsatzes bezogen maximal möglichen Durchsatz, d.h. den Durchsatz bei Volllast, ausgedrückt werden, oder als Prozentsatz der belegten Funkressourcen bezogen auf die insgesamt in der Funkzelle FZ zur Verfügung stehenden Funkressourcen. Die Bestimmung der Auslastungsgröße kann durch die Basisstation BS oder eine andere netzseitige Einrichtung erfolgen. Vorzugsweise wird als Auslastungsgröße eine Größe herangezogen, welche unabhängig von der Erfindung auch für andere Zwecke benötigt wird.

Es wird - wie im folgenden genauer beschrieben - eine diskrete Anzahl von Betriebsmodi für die Funkzelle FZ definiert. Abhängig von der bestimmten Auslastungsgröße wird entschieden, welcher Betriebsmodus anzuwenden ist. Diese Entscheidung kann entweder von der Basisstation BS oder von einer der netzseitigen Einrichtungen NET gefällt werden, welche die Basisstation BS über den zu verwendenden Betriebsmodus informiert.

Der Teilnehmerstation MS wird mittels des Indikators LI mitgeteilt, welcher Betriebsmodus zu verwenden ist. Die Aussendung des Indikators LI erfolgt vorzugsweise über einen Broadcast-Kanal, so dass alle Teilnehmerstationen der Funkzelle FZ den Indikator LI empfangen und auswerten. Die Versendung des Indikators LI erfolgt vorzugsweise periodisch, z.B. in jedem n-ten Zeitrahmen. Die Häufigkeit der Versendung des Indikators LI kann der in dem System auftretenden Häufigkeit von Veränderungen der verwendeten Auslastungsgröße angepasst werden. Sie kann gegebenenfalls mit der Zeit variieren, z.B. abhängig von der aktuellen Auslastung.

Der Indikator LI ist so ausgestaltet, dass den Teilnehmerstationen eine eindeutige Zuordnung zu dem netzseitig bestimmten Betriebsmodus möglich ist. Den Teilnehmerstationen steht jeweils eine Zuordnungstabelle zur Verfügung, welcher zu entnehmen ist, welches teilnehmerstationsseitige Verhalten bei dem jeweiligen Betriebsmodus von der Teilnehmerstation erwartet wird. In Bezug eine oder mehrere der folgenden Größen wird eine Anpassung des Verhaltens einer Teilnehmerstation an die Auslastung innerhalb der Funkzelle FZ vorgeschlagen:
- Der Umfang und/oder die Häufigkeit der von der Teilnehmerstation an die Basisstation BS versendeten Informationen betreffend den Funkkanal in Abwärtsrichtung:
   Eine Teilnehmerstation ermittelt Informationen über den Abwärtsrichtungs-Funkkanal, d.h. den Funkkanal von der Basisstation BS zu der Teilnehmerstation, indem sie Messungen an von der Basisstation BS gesendeten Signalen durchführt und gegebenenfalls die Messergebnisse weiterverarbeitet. Je mehr Informationen, bei MIMO als Feedback Information bezeichnet, die Teilnehmerstation der Basisstation BS über den Abwärtsrichtungs-Funkkanal zur Verfügung stellt, desto effizienter kann die Basisstation BS Nachrichten in Abwärtsrichtung an die Teilnehmerstation versenden. Bei einer hohen Auslastung in der Funkzelle FZ ist es vorteilhaft, wenn die Teilnehmerstation der Basisstation BS viel Information betreffend den Abwärtsrichtungs-Funkkanal zur Verfügung stellt. Denn dies resultiert darin, dass die Basisstation BS für die Nachrichtenversendung in Abwärtsrichtung eine höhere Datenrate realisieren und somit die Funkressourcen effizienter ausnutzen kann. Dies geht einher mit einem gesteigerten Batterieverbrauch der Teilnehmerstation, denn diese muss öfter die Informationen betreffend den Abwärtsrichtungs-Funkkanal an die Basisstation BS versenden.
   Bei einer niedrigen Auslastung in der Funkzelle FZ hingegen ist es nicht nötig, dass die Basisstation BS die Funkressourcen in Abwärtsrichtung besonders effizient ausnutzt. Es ist daher möglich, dass die Teilnehmerstation die Informationen betreffend den Abwärtsrichtungs-Funkkanal nur selten oder in kleinem Umfang versendet, so dass der Batterieverbrauch der Teilnehmerstation kleiner ist als bei hoher Auslastung in der Funkzelle FZ.
   Durch die Maßnahme der Anpassung von Umfang und/oder Häufigkeit der von der Teilnehmerstation an die Basisstation BS versendeten Informationen betreffend den Abwärtsrichtungs-Funkkanal an die Auslastung der Funkzelle FZ wird somit der Batterieverbrauch der Teilnehmerstationen in der Funkzelle optimiert. Weiterhin wird hierdurch die Interferenz bezogen auf die für die Abwärtsrichtung verwendeten Funkressourcen optimiert.
- Der von der Teilnehmerstation verwendete Algorithmus zur Verarbeitung von empfangenen und/oder zu versendenden Nachrichten:
   In der Regel gilt, dass bei gegebenem Funkkanal die Verarbeitung von empfangenen oder zu versendenden Nachrichten umso aufwendiger ist, je höher die Nutzdatenrate der Nachrichten ist. Je aufwendiger der Algorithmus zur teilnehmerseitigen Nachrichtenverarbeitung ist, desto höher ist auch der hierdurch verursachte Batterieverbrauch der Teilnehmerstation. Bei einer hohen Auslastung der Funkzelle FZ ist es zur effizienten Auslastung der knappen Funkressourcen erforderlich, dass die Basisstation BS Nachrichten in Abwärtsrichtung mit hoher Nutzdatenrate versendet und/oder dass die Teilnehmerstation Nachrichten in Aufwärtsrichtung mit hoher Nutzdatenrate versendet. Dementsprechend muss eine Teilnehmerstation, welche Nachrichten von der Basisstation BS empfängt, einen aufwendigen Algorithmus zur Rückgewinnung der Nutzdaten der empfangenen Nachrichten durchführen, bzw. dementsprechend muss eine Teilnehmerstation, welche Nachrichten an die Basisstation BS senden möchte, einen aufwendigen Algorithmus zur Bearbeitung der Nutzdaten vor der Versendung durchführen. Bei einer niedrigen Auslastung der Funkzelle hingegen ist es nicht nötig, die Funkressourcen in Abwärtsrichtung und/oder Aufwärtsrichtung besonders effizient auszunutzen. Es ist daher in diesem Fällen möglich, dass die Teilnehmerstation einen einfachen Algorithmus zur Nachrichtenverarbeitung einsetzt und somit Batterieleistung einspart.
   Durch die Maßnahme der Anpassung des Algorithmus der teilnehmerseitigen Nachrichtenverarbeitungen betreffend Nachrichtenversendungen in Abwärtsrichtung und/oder Aufwärtsrichtung an die Auslastung der Funkzelle FZ wird somit der Batterieverbrauch der Teilnehmerstationen in der Funkzelle optimiert. Weiterhin wird hierdurch die Interferenz bezogen auf die für die Abwärtsrichtung und/oder Aufwärtsrichtung verwendeten Funkressourcen optimiert.
- Der Umfang und/oder die Häufigkeit der Versendung von Pilotsignalen von der Teilnehmerstation an die Basisstation BS:
   Die von der Teilnehmerstation gesendeten Pilotsignale werden von der Basisstation BS zur Kanalschätzung des Aufwärtsrichtungs-Funkkanals verwendet. Bei einer hohen Auslastung der Funkzelle FZ ist es vorteilhaft, die Pilotsignale von der Teilnehmerstation zur Basisstation BS nur selten zu versenden. Hierdurch können die knappen Funkressourcen vermehrt für die Übertragung von Nutzdaten verwendet werden. Dies bewirkt allerdings, dass die Basisstation BS bei rasch veränderlichem Aufwärtsrichtungs-Funkkanal, welcher z.B. bei einer rasch bewegten Teilnehmerstation vorliegt, nur selten Kenntnis über den tatsächlichen Aufwärtsrichtungs-Funkkanal hat. Bei einer niedrigen Auslastung der Funkzelle FZ hingegen ist es möglich, dass die Pilotsignale von der Teilnehmerstation öfter und/oder in größerem Umfang ausgestrahlt werden. Hierdurch ist die Basisstation BS selbst bei rasch veränderlichem Aufwärtsrichtungs-Funkkanal stets "up to date".
   Durch die Maßnahme der Anpassung von Umfang und/oder die Häufigkeit der Versendung von Pilotsignalen von der Teilnehmerstation an die Basisstation BS an die Auslastung der Funkzelle FZ wird somit die Mobilität der Teilnehmerstationen in der Funkzelle optimiert.
- Die Häufigkeit der Durchführung einer Kanalschätzung an von der Basisstation BS gesendeten Pilotsignalen:
   Die Pilotsignale werden von der Basisstation BS ausgestrahlt und von der Teilnehmerstation zur Kanalschätzung des Abwärtsrichtungs-Funkkanals verwendet. Bei einer hohen Auslastung der Funkzelle FZ ist es vorteilhaft, die Pilotsignale von der Basisstation BS zur Teilnehmerstation nur selten zu versenden und dementsprechend die Kanalschätzung durch die Teilnehmerstation nur selten durchzuführen. Hierdurch können die knappen Funkressourcen vermehrt für die Übertragung von Nutzdaten verwendet werden. Dies bewirkt allerdings, dass die Teilnehmerstation bei rasch veränderlichem Abwärtsrichtungs-Funkkanal, welcher z.B. bei einer rasch bewegten Teilnehmerstation vorliegt, nur selten Kenntnis über den tatsächlichen Abwärtsrichtungs-Funkkanal hat. Bei einer niedrigen Auslastung der Funkzelle FZ hingegen ist es möglich, dass die Pilotsignale von der Basisstation BS öfter und/oder in größerem Umfang ausgestrahlt werden. Hierdurch ist die Teilnehmerstation selbst bei rasch veränderlichem Abwärtsrichtungs-Funkkanal stets "up to date".
   Durch die Maßnahme der Anpassung von der Häufigkeit der Kanalschätzung an von der Basisstation BS gesendeten Pilotsignalen durch die Teilnehmerstation an die Auslastung der Funkzelle FZ wird somit die Mobilität der Teilnehmerstationen in der Funkzelle FZ optimiert.
- Die Leistung der Ausstrahlung von Nachrichten durch die Teilnehmerstation:
   Die Verwendung einer niedrigeren Sendeleistung durch die Teilnehmerstation kann ermöglicht werden durch eine häufige Ausstrahlung von Informationen durch die Basisstation BS betreffend den Funkkanal in Aufwärtsrichtungs-Funkkanal. Bei einer hohen Auslastung der Funkzelle FZ ist es vorteilhaft, die Informationen betreffend den Aufwärtsrichtungs-Funkkanal von der Basisstation BS zur Teilnehmerstation nur selten zu versenden. Hierdurch ist es nicht möglich, die Sendeleistung für die Ausstrahlung von Nachrichten durch die Teilnehmerstation niedrig zu halten. Bei einer geringen Auslastung der Funkzelle FZ hingegen ist es möglich, dass die Informationen betreffend den Aufwärtsrichtungs-Funkkanal von der Basisstation BS öfter ausgestrahlt werden. Hierdurch ist es der Teilnehmerstation möglich, ihre Sendeleistung zu reduzieren.
   Durch die Maßnahme der Anpassung der Sendeleistung der Teilnehmerstation an die Auslastung der Funkzelle FZ wird somit der Batterieverbrauch der Teilnehmerstationen in der Funkzelle optimiert.

Eine Teilnehmerstation empfängt den Indikator LI von der Basisstation BS und entnimmt diesem unter Verwendung ihrer Zuordnungstabelle, wie sie sich nunmehr zu verhalten hat. Hierbei ist es möglich, dass alle Teilnehmerstationen innerhalb der Funkzelle FZ die gleiche Zuordnungstabelle zwischen den Betriebsmodi und jeweils einer oder mehrerer der erläuterten Größen aufweisen. In diesem Fall reagieren die Teilnehmerstation in Bezug auf die erläuterten Größen einheitlich bei einem Wechsel des Betriebsmodus, angezeigt durch eine Änderung des Indikators LI. Alternativ ist es möglich, dass den Teilnehmerstationen verschiedene Zuordnungstabellen vorliegen. Ist es beispielsweise einer Teilnehmerstation möglich, einen bestimmten Algorithmus zur Nachrichtenverarbeitung durchzuführen, während dies einer anderen Teilnehmerstation nicht möglich ist, so können die Zuordnungstabellen dieser Teilnehmerstationen unterschiedliche Einträge in Bezug auf die Algorithmen enthalten. Entsprechende Unterschiede zwischen den Teilnehmerstationen können z.B. auch durch die Anzahl von Antennenelementen der Teilnehmerstationen oder die jeweilige Qualität des Empfängers der Teilnehmerstationen hervorgerufen werden.

Eine weitere Möglichkeit zur Ausgestaltung der Zuordnungstabellen ist, dass die Zuordnung zwischen jeweils einem Betriebsmodus und einer der erläuterten Größen nicht eindeutig ist, sondern dass die Zuordnungstabelle der Teilnehmerstation eine Auswahl lässt, so z.B. zwischen verschiedenen Algorithmen zur Nachrichtenverarbeitung. Da jedoch der Wechsel des Betriebsmodus mit einem Wechsel des Verhaltens der Teilnehmerstation einhergehen soll, sollten für verschiedene Betriebsmodi nicht die gleichen Möglichkeiten auswählbar sein.

Es wurde der Fall beschrieben, dass eine Auslastungsgröße der Funkzelle FZ bestimmt wird, und abhängig von dieser Auslastungsgröße über einen Betriebsmodus innerhalb der Funkzelle FZ entschieden wird. Zusätzlich oder alternativ kann auch eine Auslastungsgröße betreffend eine andere Funkzelle, insbesondere betreffend eine zur Funkzelle FZ benachbarte Funkzelle, herangezogen werden, um über den einzunehmenden Betriebsmodus zu entscheiden. Hierbei kann gegebenenfalls eine Wichtung der Auslastungsgrößen der Funkzelle FZ und der anderen Funkzelle oder Funkzellen durchgeführt werden. Eine hohe oder niedrige Auslastung der anderen Funkzelle sollte - bis auf eine eventuell durchzuführende Wichtung - zu den gleichen Maßnahmen führen wie eine hohe bzw. niedrige Auslastung der Funkzelle FZ. Dies liegt darin begründet, dass Nachrichtenversendungen in einer Funkzelle zu Interferenzen auf den entsprechenden Funkressourcen anderer Funkzellen führen.

Im folgenden wird als konkretes Beispiel der Fall betrachtet, dass drei Betriebsmodi verwendet werden. Diese werden nach Art einer Verkehrsampel mit den drei Farben rot, gelb und grün bezeichnet. "Rot" entspricht hoher Auslastung, "grün" entspricht geringer Auslastung. Weiterhin existiert der Betriebsmodus "gelb", in welchem zwar die gleichen Größen wie in dem Betriebsmodus "grün" eingesetzt werden, jedoch mit einem raschen Wechsel zu "rot" gerechnet werden muss. So ist es z.B. möglich, dass bei "grün" der Betriebsmodus lediglich jeden Rahmen (englisch: frame) gewechselt werden kann, während bei "gelb" der Betriebsmodus für jeden Unterrahmen (englisch: subframe) wechseln kann. Daher sollten die Teilnehmerstationen den Indikator LI im Betriebsmodus "gelb" häufiger auswerten als in dem Betriebsmodus "grün" und gegebenenfalls auch als in dem Betriebsmodus "rot". Auch die Häufigkeit der Versendung des Indikator LI kann von dem aktuellen Betriebsmodus abhängen. Vorteilhaft ist es z.B., wenn im Betriebsmodus "gelb" die Versendung des Indikators LI zu beliebigen Zeiten erfolgen kann. Die Verwendung des Betriebsmodus "gelb" ist insbesondere in Bezug auf IP-Datenübertragungen vorteilhaft, da hierbei die Auslastung schnell und stark variieren kann. Es kann eine höhere Anzahl an Betriebsmodi vorgesehen sein, um eine größere Granularität hinsichtlich der Reaktion der Teilnehmerstationen auf die Veränderung der Lastsituation zu erreichen.

Das beschriebene Verfahren ermöglicht es, die Performance eines Funkkommunikationssystems bei verschiedenen Auslastungen zu verbessern. Gemäß dem Stand der Technik wird lediglich der Zustand der maximalen Auslastung herangezogen, um ausgehend von diesem Zustand die Performance zu optimieren. Bei einem Zustand geringerer Auslastung würde eine derartige Optimierung in der Regel zu anderen Ergebnissen führen. Insofern ist es vorteilhaft, die Optimierung für verschiedene Auslastungen zu bestimmen und abhängig von der aktuellen Auslastung entsprechende Maßnahmen zu ergreifen.

## Patentansprüche

1. Verfahren zum Betreiben eines Funkkommunikationssystems, welches zumindest eine netzseitige Funkstation (BS) mit ihrem Funkabdeckungsbereich (FZ) umfasst,
wobei unter Verwendung einer eine aktuelle Funkauslastung in dem Funkabdeckungsbereich (FZ) beschreibenden Größe ein Parameter (LI) ausgewählt wird,
die netzseitige Funkstation (BS) eine den Parameter (LI) enthaltende Nachricht an zumindest eine Teilnehmerstation (MS) versendet,
wobei der Parameter (LI) ein Verhalten der zumindest einen Teilnehmerstation (MS) vorgibt betreffend:
• die Versendung durch die zumindest eine Teilnehmerstation (MS) von Informationen betreffend den Funkkanal zwischen der netzseitigen Funkstation (BS) und der zumindest einen Teilnehmerstation (MS), und/oder
• die Anwendung eines Verfahrens zur Bearbeitung von Nachrichten durch die zumindest eine Teilnehmerstation (MS),
und/oder
• die Versendung von Signalen durch die zumindest eine Teilnehmerstation (MS) zur Verwendung zur Kanalschätzung durch die netzseitige Funkstation (BS),
und/oder
• die Häufigkeit der Durchführung einer Kanalschätzung durch die zumindest eine Teilnehmerstation (MS),
und/oder
• die Sendeleistung von von der zumindest einen Teilnehmerstation (MS) versendeten Nachrichten,
und/oder
• das Abhören von Nachrichten, welche den Parameter (LI) enthalten, durch die zumindest eine Teilnehmerstation (MS).

2. Verfahren nach Anspruch 1, bei dem
der Parameter (LI) das Verhalten der zumindest einen Teilnehmerstation (MS) hinsichtlich der Versendung durch die zumindest eine Teilnehmerstation (MS) von Informationen betreffend den Funkkanal zwischen der netzseitigen Funkstation (BS) und der zumindest einen Teilnehmerstation (MS) derart vorgibt, dass bei steigender Funkauslastung die Informationen häufiger und/oder in größerem Umfang zu versenden sind.

3. Verfahren nach einem der Ansprüche 1 bis 2, bei dem
der Parameter (LI) das Verhalten der zumindest einen Teilnehmerstation (MS) hinsichtlich der Anwendung eines Verfahrens zur Bearbeitung von Nachrichten durch die zumindest eine Teilnehmerstation (MS) derart vorgibt, dass bei steigender Funkauslastung ein Verfahren angewendet wird, welches die Übertragung von Informationen mit höherer Datenrate ermöglicht.

4. Verfahren nach Anspruch 3, bei dem
das Verfahren zur Bearbeitung von Nachrichten auf von der zumindest einen Teilnehmerstation (MS) empfangene und/oder auf von der zumindest einen Teilnehmerstation (MS) zu versendende Nachrichten angewandt wird.

5. Verfahren nach einem der Ansprüche 1 bis 4, bei dem
der Parameter (LI) das Verhalten der zumindest einen Teilnehmerstation (MS) hinsichtlich der Versendung von Signalen durch die zumindest eine Teilnehmerstation (MS) zur Verwendung zur Kanalschätzung durch die netzseitige Funkstation (BS) derart vorgibt, dass bei steigender Funkauslastung diese Signale weniger häufig und/oder in kleinerem Umfang zu versenden sind.

6. Verfahren nach einem der Ansprüche 1 bis 5, bei dem
der Parameter (LI) das Verhalten der zumindest einen Teilnehmerstation (MS) hinsichtlich der Häufigkeit der Durchführung einer Kanalschätzung durch die zumindest eine Teilnehmerstation (MS) derart vorgibt, dass bei steigender Funkauslastung die Kanalschätzung weniger häufig durchzuführen ist.

7. Verfahren nach einem der Ansprüche 1 bis 6, bei dem
der Parameter (LI) das Verhalten der zumindest einen Teilnehmerstation (MS) hinsichtlich der Sendeleistung von von der zumindest einen Teilnehmerstation (MS) versendeten Nachrichten derart vorgibt, dass bei steigender Funkauslastung die Nachrichten mit größerer Sendeleistung zu versenden sind.

8. Verfahren nach einem der Ansprüche 1 bis 7, bei dem
der Parameter (LI) ausgewählt wird unter Verwendung der eine aktuelle Funkauslastung in dem Funkabdeckungsbereich (FZ) beschreibenden Größe und einer eine aktuelle Funkauslastung in zumindest einem anderen Funkabdeckungsbereich (FZ) beschreibenden Größe.

9. Verfahren nach einem der Ansprüche 1 bis 8, bei dem
der Parameter (LI) aus einer Anzahl auswählbarer Parameter ausgewählt wird.

10. Verfahren nach einem der Ansprüche 1 bis 9, bei dem
der zumindest einen Teilnehmerstation (MS) eine Zuordnungsvorschrift zwischen mehreren Parametern (LI) und jeweils einem ihr durch die Parameter (LI) vorgegebenen Verhalten vorliegt.

11. Verfahren nach Anspruch 10, bei dem
gemäß der Zuordnungsvorschrift in Bezug auf zumindest einen Parameter (LI) mehrere alternative Verhalten vorgegeben sind.

12. Verfahren nach Anspruch 10 oder 11, bei dem verschiedenen Teilnehmerstationen (MS) verschiedene Zuordnungsvorschriften vorliegen.

13. Verfahren nach einem der Ansprüche 1 bis 12, bei dem
die den Parameter (LI) enthaltende Nachricht per Broadcast ausgestrahlt wird.

14. Verfahren nach einem der Ansprüche 1 bis 13, bei dem
der Parameter (LI) von der netzseitigen Funkstation (BS) oder von einer anderen mit der netzseitigen Funkstation (BS) verbundenen netzseitigen Einrichtung (NET) ausgewählt wird.

15. Vorrichtung (NET, BS) für ein Funkkommunikationssystem, welches zumindest eine netzseitige Funkstation (BS) mit ihrem Funkabdeckungsbereich (FZ) umfasst, mit
Mitteln zum Auswählen eines Parameters (LI) unter Verwendung einer eine aktuelle Funkauslastung in dem Funkabdeckungsbereich (FZ) beschreibenden Größe,
Mitteln zum Erstellen und Versenden einer den Parameter (LI) enthaltenden Nachricht an zumindest eine Teilnehmerstation (MS),
wobei der Parameter (LI) ein Verhalten der zumindest einen Teilnehmerstation (MS) vorgibt betreffend:
• die Versendung durch die zumindest eine Teilnehmerstation (MS) von Informationen betreffend den Funkkanal zwischen der netzseitigen Funkstation (BS) und der zumindest einen Teilnehmerstation (MS),
und/oder
• die Anwendung eines Verfahrens zur Bearbeitung von Nachrichten durch die zumindest eine Teilnehmerstation (MS),
und/oder
• die Versendung von Signalen durch die zumindest eine Teilnehmerstation (MS) zur Verwendung bei einer Kanalschätzung durch die netzseitige Funkstation (BS),
und/oder
• die Häufigkeit der Durchführung einer Kanalschätzung durch die zumindest eine Teilnehmerstation (MS),
und/oder
• die Sendeleistung von von der zumindest einen Teilnehmerstation (MS) versendeten Nachrichten,
und/oder
• das Abhören von Nachrichten, welche den Parameter (LI) enthalten, durch die zumindest eine Teilnehmerstation (MS) .

16. Computerprogrammprodukt zur Durchführung eines Verfahrens nach einem der Ansprüche 1 bis 14.
